# EUROPÄISCHE PATENTSCHRIFT

(11) **EP 3 165 351 B1**
(45) Veröffentlichungstag und Bekanntmachung des Hinweises auf die Patenterteilung: **25.07.2018**
(21) Anmeldenummer: 16183148.2
(22) Anmeldetag: 08.08.2016
(51) Int. Cl.: B29D 30/32

(54) **REIFENBAUVORRICHTUNG SOWIE VERFAHREN ZUM HERSTELLEN EINES REIFENROHLINGS**
TIRE CONSTRUCTION DEVICE AND METHOD FOR PRODUCING A TIRE BLANK
DISPOSITIF DE FABRICATION DE PNEU ET PROCEDE DE FABRICATION D'UNE EBAUCHE DE PNEU

(30) Priorität: 05.11.2015 DE 102015221700
(43) Veröffentlichungstag der Anmeldung: 10.05.2017
(73) Patentinhaber: Continental Reifen Deutschland GmbH, 30165 Hannover (DE)
(72) Erfinder: Reitmann, Sebastian, 31558 Hagenburg (DE); Knull, Stephan, 30890 Barsinghausen (DE)
(74) Vertreter: Widjaja, Wira

(56) Entgegenhaltungen:
- EP-A1- 2 508 331
- EP-A1- 2 796 278
- WO-A1-2011/065829
- DE-A1-102013 221 967
- KR-A- 20110 091 426
- US-A- 4 830 693

## Beschreibung

Die Erfindung betrifft eine Reifenbauvorrichtung zum Herstellen eines Reifenrohlings mit Hilfe mindestens einer auf einer Bautrommel, auf der eine Innenschicht sowie radial darüber eine Einlage ablegbar sind, wobei die Innenschicht und die Einlage jeweils aus nicht vulkanisierten Gummimischungen bestehen, bei der axial beiderseits neben der Bautrommel jeweils ein zylindrischer Balgträger angeordnet ist, auf denen jeweils ein aufblasbarer Balg ablegbar ist, bei der axial neben jeden der beiden Balgträger jeweils eine axial verfahrbare Umbugglocke angeordnet ist, bei der an den beiden Umbugglocken an deren zueinander weisenden Seiten jeweils ein ringförmiger Kern angeordnet werden kann, bei der nach einem axialen Heranfahren der beiden Umbugglocken an die Einlage die beiden Kerne auf dieser Einlage axial endseitig aufgesetzt werden können, bei der nach einem axialen Zurückfahren der beiden Umbugglocken die beiden Bälge aufblasbar sind, bei der durch ein erneutes axiales Heranfahren der Umbugglocken in Richtung zur Bautrommel die axialen Enden der Einlage mit Hilfe der aufgeblasenen Bälge von den Umbugglocken um den jeweils zugeordneten Kern unter Ausbildung eines ersten und zweiten Lagenumschlags umschlagbar sind, und bei der die Bautrommel, die Balgträger, die Bälge sowie die Umbugglocken jeweils koaxial zu einer horizontal verlaufenden Längsmittelachse angeordnet sind. Außerdem betrifft die Erfindung ein Verfahren zur Herstellung eines solchen Reifenrohlings.

Aus dem Stand der Technik sind Reifenbaumaschinen zur Reifenherstellung in verschiedenen Ausführungsformen bekannt, bei denen Umbugglocken mit Pneumatikzylindern axial in Bezug zu einer Bautrommel verschiebbar angeordnet sind. In einem ersten Produktionsschritt wird auf die Bautrommel eine aus einer Gummimischung bestehende Innenschicht aufgewickelt. Auf diese Innenschicht wird dann eine Einlage aus einer Gummimischung aufgewickelt, und anschließend werden die Innenschicht sowie die Einlage an ihren axialen Enden zusammen etwas nach radial innen umgeformt. Dabei werden die axialen Enden der Einlage auf der Oberfläche von jeweils einem noch nicht aufgeblasenen Balg abgelegt, die jeweils auf axial neben der Bautrommel auf zylindrischen Balgträgern angeordnet sind. Die beiden Bälge weisen im radial nicht expandierten Zustand eine im Wesentlichen zylindrische Mantelfläche auf. An die beiden endseitig nach radial innen etwas umgeformten Seitenflächen der Einlage wird dann jeweils ein ringförmiger Kern angesetzt, welche unter anderem zur Gewährleistung eines ordnungsgemäßen und luftdicht abschließenden Sitzes eines fertigen Reifens auf einer Felge dienen. Die beiden Kerne bestehen beispielsweise aus einer Gummimischung, in der ein Draht kreisförmig angeordnet ist.

Zum Ansetzen der ringförmigen Kerne an den jeweils radial umgeformten endseitigen Bereich der Einlage werden die Umbugglocken zusammen mit den daran für deren Montage angeordneten Kernen axial beidseitig an die Innenschicht herangefahren. Aufgrund der bisher üblichen Verwendung von Pneumatikzylindern erfolgen das axiale Heranfahren der Umbugglocken und insbesondere deren beidseitiges Anschlagen an die Bautrommel nur gesteuert und damit ungeregelt. Die Pneumatikzylinder werden während des Verfahrprozesses zunächst mit maximalem Druck beaufschlagt, um eine maximale Beschleunigung zur Erzielung von kurzen Taktzeiten in der Produktion zu erreichen. Erst nach dem Durchfahren einer bestimmten Wegstrecke wird der Betriebsdruck der Pneumatikzylinder auf einen sogenannten Kernsetzdruck umgestellt, wodurch aber die Umbugglocken mit den daran angeordneten Kernen dennoch weitgehend ungebremst und mit einer undefinierten Kraft sowie Geschwindigkeit seitlich auf die Bautrommel auflaufen.

Anschließend werden die Umbugglocken von der Bautrommel axial zurückgefahren und die aufblasbaren Bälge zur Vorbereitung eines nun folgenden Lagenumschlags aufgebläht. Im Anschluss daran werden die Umbugglocken wieder axial an die Bautrommel herangefahren, so dass die Bälge mit Hilfe der Umbugglocken jeweils randseitig über die auf der Bautrommel angeordnete Innenschicht abrollen. Bei diesem Vorgang schlagen die beiden axialen Enden der Einlage jeweils randseitig um die Kerne um. Während dieses Umbugvorgangs werden die Bälge je nach Prozessfortschritt belüftet oder entlüftet. Die Vorwärtsbewegung der Umbugglocken ist hierbei vorrangig abhängig vom aktuellen Kräftegleichgewicht zwischen den Pneumatikzylindern und dem Innendruck der Bälge während des randseitigen Umschlagens der Einlage um die Kerne. Dieses Kräftegleichgewicht ist jedoch weitgehend undefiniert, von zeitlich variierenden Prozessparametern abhängig, und mittels druckbetätigbaren Stellvorrichtungen nicht präzise regelbar.

Aus der US 4 830 693 A ist ein ähnliches Verfahren zum Herstellen eines Reifens mit Hilfe einer Bautrommel einer Reifenbaumaschine bekannt. Bei diesem Verfahren werden zwei ringförmige Kernsetzvorrichtungen, an denen jeweils ein ringförmiger Kern gehalten ist, mittels einer von einem Motor drehend angetriebenen Schraubenwelle axial verschoben, also synchron zusammen- oder auseinander gefahren. Ein voneinander unabhängiges Verfahren der Kernsetzvorrichtungen bei gleichzeitiger Erfassung der auftretenden Kernsetzkräfte ist jedoch nicht vorgesehen.

Der Erfindung liegt die Aufgabe zugrunde, eine Reifenbauvorrichtung vorzustellen, mit der eine präzise Regelbarkeit des Umbugvorgangs möglich ist, um sicher reproduzierbare sowie vergleichsweise schnell durchführbare Prozessergebnisse zu erreichen. Außerdem soll die Erfindung ein Verfahren zur Herstellung eines Reifenrohlings beschreiben, welches mit Hilfe der genannten Reifenbauvorrichtung bei kurzen Taktzeiten sehr verlässlich reproduzierbare Produktionsergebnisse ermöglicht.

Die Lösung dieser Aufgaben ist in den unabhängigen Ansprüchen 1 und 8 definiert, während die Unteransprüche vorteilhafte Weiterbildungen benennen. Die Erfindung betrifft demnach eine Reifenbauvorrichtung zum Herstellen eines Reifenrohlings mit Hilfe mindestens einer auf einer Bautrommel, auf der eine Innenschicht sowie radial darüber eine Einlage ablegbar sind, wobei die Innenschicht und die Einlage jeweils aus nicht vulkanisierten Gummimischungen bestehen, bei der axial beiderseits neben der Bautrommel jeweils ein zylindrischer Balgträger angeordnet ist, auf denen jeweils ein aufblasbarer Balg ablegbar ist, bei der axial neben jeden der beiden Balgträger jeweils eine axial verfahrbare Umbugglocke angeordnet ist, bei der an den beiden Umbugglocken an deren zueinander weisenden Seiten jeweils ein ringförmiger Kern angeordnet werden kann, bei der nach einem axialen Heranfahren der beiden Umbugglocken an die Einlage die beiden Kerne auf dieser Einlage axial endseitig aufgesetzt werden können, bei der nach einem axialen Zurückfahren der beiden Umbugglocken die beiden Bälge aufblasbar sind, bei der durch ein erneutes axiales Heranfahren der Umbugglocken in Richtung zur Bautrommel die axialen Enden der Einlage mit Hilfe der aufgeblasenen Bälge von den Umbugglocken um den jeweils zugeordneten Kern unter Ausbildung eines ersten und zweiten Lagenumschlags umschlagbar sind, und bei der die Bautrommel, die Balgträger, die Bälge sowie die Umbugglocken jeweils koaxial zu einer horizontal verlaufenden Längsmittelachse angeordnet sind Zur Lösung der vorrichtungsbezogenen Aufgabe ist vorgesehen, dass die Umbugglocken zum Aufsetzen der Kerne unabhängig voneinander mittels jeweils eines eigenen Linearantriebs in Bezug zur Bautrommel axial verfahrbar sind, dass zumindest eine an der ersten Umbugglocke wirksame erste Kernsetzkraft und eine an der zweiten Umbugglocke wirksame zweite Kernsetzkraft mittels mindestens einer Messeinrichtung erfassbar sind, dass die von der mindestens einen Messeinrichtung erfassten Messwerte mindestens einer Regeleinrichtung zur Steuerung und Regelung der beiden Linearantriebe zuleitbar sind, und dass mittels der mindestens einen Regeleinrichtung zumindest die beiden Kernsetzkräfte durch Einwirken auf die beiden Linearantriebe regelbar sind, wobei die jeweilige Kernsetzkraft angibt, mit welcher axialen Kraft die Umbugglocken die Kerne auf die Einlage aufsetzen.

Hierdurch können die Umbugglocken im Gegensatz zu einem konventionellen Antrieb mit Pneumatikzylindern beliebige axiale Positionen mit hoher Genauigkeit und Geschwindigkeit in Bezug zur Bautrommel einnehmen, wobei die axialen Positionen zur Optimierung der Prozesssicherheit sehr zuverlässig reproduzierbar sind. Zumindest die Kernsetzkräfte werden beim Anfahren der Umbugglocken an die Bautrommel erfasst und entsprechen einer jeweils beim Aufschieben der Kerne auf die Einlage wirkenden mechanischen Kraft. Bei der Reifenbauvorrichtung kann es sich zum Beispiel um eine so genannte Klapptrommelmaschine oder um eine Expansionstrommelmaschine handeln.

Gemäß einer vorteilhaften Weiterbildung ist vorgesehen, dass jeder Linearantrieb mindestens zwei Lineargetriebe aufweist, die jeweils von einem Verteilergetriebe und jeweils einem Elektromotor antreibbar sind. Infolgedessen ist ein konstruktiv einfacher Aufbau der Linearantriebe gegeben, wobei zugleich eine synchrone axiale Verfahrbewegung der Lineargetriebe möglich ist.

Bei einer Ausführungsform ist vorgesehen, dass die erste Kernsetzkraft der ersten Umbugglocke und die zweite Kernsetzkraft der zweiten Umbugglocke jeweils mittels einer Motorstrommesseinrichtung erfassbar sind, welche dem ersten Linearantrieb und dem zweiten Linearantrieb zugeordneten sind. Die beiden Motorstrommesseinrichtungen können in einem Gehäuse zusammengefasst sein. Hierdurch ist eine besonders robuste und zugleich wenig aufwendige Erfassung der jeweiligen Kernsetzkräfte möglich.

Entsprechend einer weiteren Ausgestaltung ist vorgesehen, dass die erste Kernsetzkraft der ersten Umbugglocke und die zweite Kernsetzkraft der zweiten Umbugglocke jeweils mittels mindestens eines Kraftmesssensors erfassbar sind. Hierdurch ist ebenfalls eine direkte, weitgehend verzögerungsfreie und daher besonders genaue Erfassung der Kernsetzkräfte möglich. Die Kraftmesssensoren können zum Beispiel im Bereich der Umbugglocken und/oder deren Linearantriebe angeordnet sowie als Piezosensoren ausgebildet sein.

Bevorzugt weist jeder Linearantrieb jeweils zwei Lineargetriebe auf, die diametral zueinander sowie parallel in Bezug zu der Längsmittelachse zumindest teilweise in einem ersten Gehäuseteil beziehungsweise in einem zweiten Gehäuseteil der Reifenbauvorrichtung angeordnet sind, wobei das erste Gehäuseteil axial verschiebbar und das zweite Gehäuseteil ortsfest angeordnet ist. Hierdurch lassen sich die Umbugglocken mit hoher Präzision in Bezug zur Bautrommel axial bewegen und positionieren. Die axiale Bewegbarkeit des ersten Gehäuseteils ermöglicht die Entnahme eines Reifenrohlings aus der Reifenbauvorrichtung.

Gemäß einer weiteren günstigen Ausgestaltung ist vorgesehen, dass die zwei Lineargetriebe eines jeden Linearantriebs jeweils durch ein Zahnstangengetriebe gebildet sind. Hierdurch ist eine verlässliche Funktion sowie genaue axiale Positionierbarkeit der Linearantriebe bei einem vergleichsweise geringen konstruktiven Aufwand gegeben. Alternativ dazu können die Lineargetriebe auch als Kugelgewindegetriebe oder Spindelhubgetriebe ausgebildet sein.

Darüber hinaus wird die eingangs genannte Aufgabe durch ein Verfahren mit den Merkmalen des unabhängigen Verfahrensanspruchs 8 gelöst. Dieses Verfahren dient zur Herstellung eines Reifenrohlings mittels der beschriebenen Reifenbauvorrichtung und weist die folgenden Schritte auf:
a) Belegen einer Bautrommel der Reifenbauvorrichtung mit einer Innenschicht sowie radial darüber mit einer Einlage, wobei die Innenschicht und die Einlage jeweils aus nicht vulkanisierten Gummimischungen bestehen, und wobei die axialen Enden der Einlage auf jeweils einem noch nicht aufgeblasenen Balg liegen,
b) beidseitig axiales Heranfahren von zwei Umbugglocken an die Bautrommel mittels jeweils einem Linearantrieb,
c) Auflegen und Anpressen von jeweils einem an den beiden Umbugglocken gehaltenen ringförmigen Kern auf die Einlage im Bereich derer axialen Enden,
d) dabei Erfassen von Kernsetzkräften, welche die Anpresskraft der Umbugglocken angeben, sowie Weiterleiten der Messwerte an eine Regeleinrichtung zur Steuerung und Regelung der Linearantriebe,
c) axiales Zurückfahren der beiden Umbugglocken bis zur radialen Freigabe der beiden Bälge,
d) zumindest teilweises Aufblasen der beiden Bälge,
e) erneutes beidseitiges axiales Heranfahren der Umbugglocken an die Bautrommel, dabei mittels eines radialen Kontaktes der Umbugglocken mit den Bälgen Abrollen der beiden Bälge auf der Einlage und zugleich Umschlagen der axialen Enden der Einlage um einen zugeordneten Kern unter Schaffung von zwei Lagenumschlägen,
f) erneutes axiales Zurückfahren der Umbugglocken bis zur Freigabe der Bälge, und
g) Weiterverarbeiten des so erzeugten Reifenrohlings zu einem fertigen Reifen für ein Fahrzeug.

Durch die mittels der Linearantriebe frei und mit hoher Genauigkeit axial sowie im Bedarfsfall sogar unabhängig voneinander positionierbaren Umbugglocken und die kontinuierliche Erfassung der zumindest beim Aufsetzen der Kerne mittels der Umbugglocken auf diese einwirkenden mechanischen Kräfte, insbesondere in Form der genannten Kernsetzkräfte, ist unter anderem eine hohe Prozesssicherheit bei zugleich verkürzten Taktzeiten möglich. Durch das Einstellen geeigneter axialer Vorpositionen der Umbugglocken über den Bälgen lassen sich definierte Berührpunkte zwischen den Umbugglocken und den aufgeblasenen Bälgen erzielen, welches unter anderem zu einer verbesserten Ausnutzung der verfügbaren axialen Balglänge führt.

Schließlich kann vorgesehen sein, dass mittels der genannten Messeinrichtung diejenigen Kräfte gemessen und ausgewertet werden, welche beim Erzeugen der axialen Lagenumschläge entstehen, und dass daraus Steuerungssignale angeleitet werden, mittels denen die Elektromotoren während der Axialbewegung der Umbugglocken zur Erzeugung der Lagenumschläge gesteuert werden. Hierdurch kann der Lagenumschlag sehr präzise durchgeführt und mit einem optimal kurzen axialen Betätigungsweg durchgeführt werden.

Zum besseren Verständnis der Erfindung ist der Beschreibung eine Zeichnung von einem Ausführungsbeispiel beigefügt. In dieser Zeichnung zeigt
Fig. 1 eine schematische Darstellung einer Reifenbauvorrichtung mit einer Bautrommel und zwei Umbugglocken,
Fig. 2 die Reifenbauvorrichtung gemäß Fig. 1 beim Umschlagen einer auf der Bautrommel auf einer Innenschicht abgelegten Einlage um zwei ringförmige Kerne unter Schaffung eines Reifenrohlings, und
Fig. 3 einen Querschnitt durch die Reifenbauvorrichtung entlang der Schnittlinie III-III von Fig. 2.

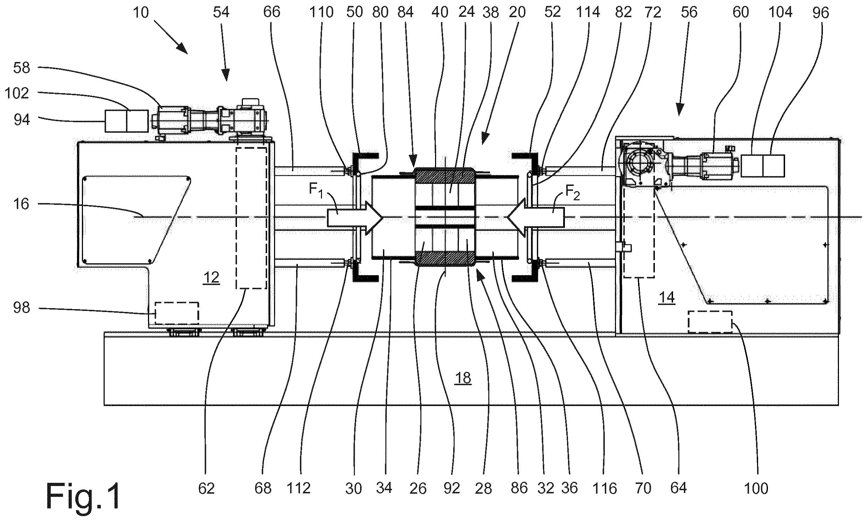

Die Fig. 1 zeigt eine Reifenbauvorrichtung 10 mit einer Bautrommel 20 und zwei Umbugglocken 50, 52 in einer Ausgangsstellung. Die Reifenbauvorrichtung 10 weist ein linksseitiges erstes Gehäuseteil 12 und ein rechtsseitiges zweites Gehäuseteil 14 auf. Das erste Gehäuseteil 12 ist parallel zu einer Längsmittelachse 16 verschiebbar auf einem Unterteil 18 aufgenommen, während das zweite Gehäuseteil 14 ortsfest auf dem Unterteil 18 angeordnet ist. Mittig zwischen den beiden Gehäuseteilen 12, 14 befindet sich die im Wesentlichen zylindrische Bautrommel 20, welche ein Mittelteil 24 und zwei beidseitig daran anschließende Seitenteilen 26, 28 aufweist. Das Mittelteil 24 sowie die beiden Seitenteile 26, 28 sind jeweils in Bezug zueinander radial und axial verschiebbar ausgebildet. Demzufolge ist die Reifenbauvorrichtung 10 nach Art einer Klapptrommelmaschine beziehungsweise einer Expansionstrommelmaschine ausgebildet, bei denen die radiale Expansion zur Ausbildung eines näherungsweise U-förmigen Querschnitts des Reifenrohlings mit Seitenwänden und Lauffläche mittels einer konturierten, mehrteiligen Bautrommel 20 erfolgt. Hinsichtlich des näheren konstruktiven Aufbaus sowie der Funktionsweise der Bautrommel 20 sei an dieser Stelle auf die DE 10 2009 025 759 A1 (dort Bezugsziffer 8) verwiesen, deren Offenbarung hiermit ausdrücklich in die vorliegende Beschreibung mit einbezogen wird.

Unmittelbar axial beiderseits der Bautrommel 20 sind ein erster und ein zweiter Balgträger 30, 32 angeordnet, wobei auf dem linksseitigen, ersten Balgträger 30 ein erster aufblasbarer Balg 34 und auf dem rechtsseitigen, zweiten Balgträger 32 ein zweiter aufblasbarer Balg 36 angeordnet ist. Die beiden Bälge 34, 36 lassen sich durch die Zufuhr von Druckluft aufblasen, also bevorzugt gleichmäßig radial expandieren. In dem in Fig. 1 gezeigten, vollständig entlüfteten und eingeschrumpften Zustand der Bälge 34, 36 bilden diese jeweils eine zylindrische, koaxial zur Längsmittelachse 16 plane Außenmantelfläche aus, wobei zwischen dieser Außenmantelfläche und der Bautrommel 20 jeweils ein geringfügiger umlaufender radialer Absatz beziehungsweise eine Schulter ausgebildet ist.

Auf der Bautrommel 20 ist eine Innenschicht 38 aus einer nicht vulkanisierten Gummimischung aufgewickelt. Auf dieser Innenschicht 38 ist eine ebenfalls aus einer nicht vulkanisierten Gummimischung gefertigte Einlage 40 ringförmig aufgelegt, welche axial außerhalb der Innenschicht 38 mit ihren axialen Enden radial auf den beiden Bälgen 34, 36 aufliegt. Bei dieser Einlage 40 kann es sich zum Beispiel um eine luftdichte Lage oder eine Karkasse handeln, welche gewebeverstärkt und faserarmiert sein kann.

Axial beidseitig der Bautrommel 20 und der Bälge 34, 36 sind die erste und die zweite Umbugglocke 50, 52 angeordnet, deren Geometrie jeweils der eines Topfes mit einer zentrischen, kreisrunden Öffnung im Boden entspricht. Die Umbugglocken 50, 52, die Bautrommel 20, die Balgträger 30, 32 und die Bälge 34, 36 sind koaxial zu der Längsmittelachse 16 ausgerichtet, wobei die Längsmittelachse 16 ihrerseits parallel beabstandet zu dem Unterteil 18 der Reifenbauvorrichtung 10 verläuft.

Die beiden Umbugglocken 50, 52 sind jeweils mittels eines Linearantriebs 54, 56 mit hoher Genauigkeit parallel zur Längsmittelachse 16 in Bezug zu der Bautrommel 20 axial verschiebbar angeordnet. Hierbei können die Umbugglocken 50, 52 im Gegensatz zu einem bisher üblichen Antrieb mittels Pneumatikzylinder, der lediglich zwei definierte axiale Endlagen der Umbugglocken 50, 52 erlaubt, beliebige Zwischenpositionen am axialen Stellweg einnehmen. Jeder Linearantrieb 54, 56 verfügt über einen eigenen Elektromotor 58, 60, so dass gegebenenfalls auch eine voneinander unabhängige axiale Positionierung der beiden Umbugglocken 50, 52 in Bezug zur Bautrommel 20 möglich ist. Die beiden Elektromotoren 58, 60 können zum Beispiel als Servomotoren ausgeführt sein. Die beiden Elektromotoren 58, 60 treiben jeweils über ein erstes beziehungsweise zweites Verteilergetriebe 62, 64 jeweils zwei Lineargetriebe 66, 68; 70, 72 an, wobei die beiden Lineargetriebe mit den Bezugsziffern 66, 68 zum axialen Positionieren der ersten Umbugglocke 50 dienen, während die beiden Linearantriebe mit den Bezugsziffern 70, 72 dieselbe Funktion für die zweite Umbugglocke 52 ausüben.

Durch die mittels der Verteilergetriebe 62, 64 jeweils paarweise gekoppelten Lineargetriebe 66, 68; 70, 72 ist stets deren Gleichlauf und damit eine absolut synchrone, axiale Verfahrbewegung der Linearantriebe 54, 56 gewährleistet.

Die stangenartigen Linearantriebe 66, 68, 70, 72 sind bevorzugt als Zahnstangengetriebe ausgebildet, sie können alternativ dazu aber auch als Kugelgewindegetriebe oder Spindelhubgetriebe realisiert sein. Die beiden Lineargetriebe 66, 68 für die erste Umbugglocke 50 sowie die beiden Lineargetriebe 70, 72 für die zweite Umbugglocke 52 sind jeweils diametral und parallel beabstandet zur Längsmittelachse 16 ausgerichtet angeordnet.

Ferner können mehr als die hier lediglich exemplarisch gezeigten jeweils zwei Lineargetriebe 66, 68; 70, 72 zum axialen Verfahren der Umbugglocken 50, 52 vorgesehen sein.

In jeder Umbugglocke 50, 52 ist jeweils ein ringförmiger, beispielsweise aus einem Draht gewickelter Kern 80, 82 mithilfe von nicht näher bezeichneten Halteelementen, wie zum Beispiel Magneten oder Klammern aufgenommen, mittels derer die Kerne 80, 82 haltbar und auch wieder freigebbar sind. Der erste Kern 80 und der zweite Kern 82 werden jeweils durch ein axiales gegeneinander Bewegen der beiden Umbugglocken 50, 52 im Zuge des Herstellungsprozesses des Reifenrohlings 130 randseitig auf die Einlage 40 abgelegt, also jeweils in einem Bereich 84, 86 zwischen den beiden Bälgen 34, 36 und den Seitenteilen 26, 28 der Bautrommel 20 positioniert. Vor dem axialen Auseinanderfahren der beiden Umbugglocken 50, 52 nach dem Positionieren der Kerne 80, 82 geben die Halteelemente an den Umbugglocken 50, 52 die Kerne 80, 82 frei, so dass deren Lage nicht mehr verändert wird.

In der in Fig. 1 dargestellten Ausgangsstellung der Reifenbauvorrichtung 10 sind die Bautrommel 2, die beidseitigen Balgträger 30, 32, die darauf angeordneten Bälge 34, 36 sowie die Umbugglocken 50, 52 spiegelsymmetrisch zu einer Mittelebene 92 positioniert, die ihrerseits senkrecht von der Längsmittelachse 16 durchsetzt ist.

Der erste und der zweite Elektromotor 58, 60 des ersten und zweiten Linearantriebs 54, 56 ist vorzugsweise jeweils individuell mittels einer elektronischen Regeleinrichtung 94, 96 ansteuerbar und regelbar, wobei die Ansteuerung beziehungsweise die elektrische Regelung der Elektromotoren 58, 60 auf der Basis einer Vielzahl von Messwerten erfolgt, die im vorgestellten Beispiel von einer lediglich angedeuteten ersten Messeinrichtung 98 und einer zweiten Messeinrichtung 100 stammen.

Somit lassen sich mittels der ersten Regeleinrichtung 94 und der ersten Messeinrichtung 98 die axialen Verfahrwege beziehungsweise die axialen Positionen der ersten Umbugglocke 50 und darüber hinaus auf diese, insbesondere in axialer Richtung einwirkende mechanische Kräfte präzise erfassen. Korrespondierend hierzu lassen sich mit Hilfe der zweiten Regeleinrichtung 96 und der zweiten Messeinrichtung 100 die Verfahrwege der zweiten Umbugglocke 52 sowie die auf diese einwirkenden axialen Kräfte beziehungsweise Lasten messtechnisch bestimmen.

Eine Erfassung der axialen Stellwege des ersten sowie zweiten Linearantriebs 54, 56 und damit der an diesen angekoppelten Umbugglocken 50, 52 ist zum Beispiel mit geeigneten, bevorzugt berührungslos arbeitenden elektronischen Weg- oder Lagesensoren realisierbar.

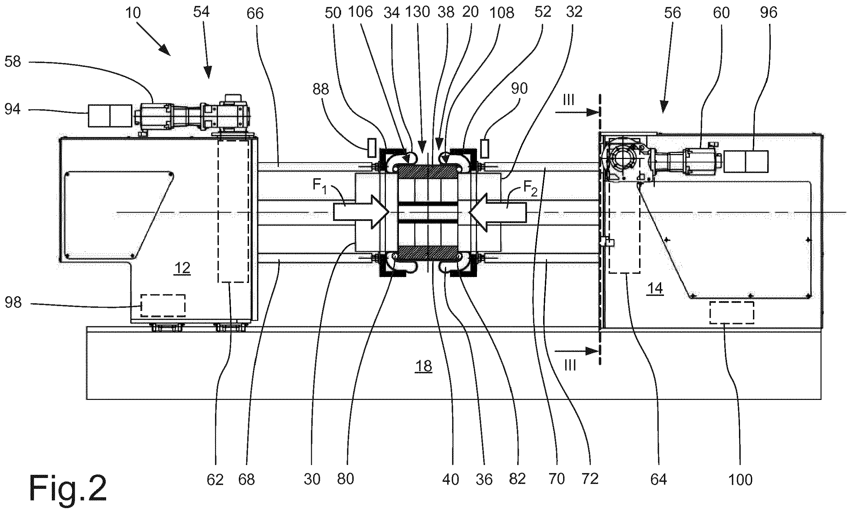

Die Erfassung der auf die Umbugglocken 50, 52 beim Verfahren einwirkenden axialen Kräfte kann zum Beispiel mithilfe einer ersten sowie einer zweiten Motorstrommesseinrichtung 102, 104 und/oder mit Hilfe von Kraftsensoren 88, 90 (Fig. 2) erfolgen, die beispielsweise als Piezosensoren oder Dehnungsmessstreifen ausgebildet sind. Zu diesem Zweck werden die Kraftsensoren 88, 90 an geeigneter Stelle, wie zum Beispiel im Bereich der Anbindungspunkte 110, 112, 114, 116 der Lineargetriebe 66, 68, 70, 72 an die Umbugglocken 50, 52 angeordnet. Hierdurch ist insbesondere die Messung der während des Aufsetzens der Kerne 80, 82 auf die Einlage 40 einwirkenden ersten Kernsetzkraft F₁ sowie der zweiten Kernsetzkraft F₂ möglich, auf deren Grundlage dann die Elektromotoren 58, 60 mittels der Regeleinrichtungen 94, 96 zur weiteren Optimierung des Herstellungsvorgangs des Reifenrohlings 130 auf geeignete Weise ansteuerbar sind.

Anstelle der rein mechanischen Kopplung der Lineargetriebe 66, 68 des ersten Linearantriebs 54 beziehungsweise der Lineargetriebe 70, 72 des zweiten Linearantriebs 56 kann zur Reduzierung der beweglichen Komponenten eine elektronische Kopplung mittels der Regeleinrichtungen 94, 96 und der Messeinrichtungen 98, 100 vorgesehen sein.

Fig. 2 zeigt die Reifenbauvorrichtung 10 der Fig. 1 beim axialen Umschlagen einer auf der Bautrommel 20 abgelegten Einlage 40 um zwei vorab oben auf der Einlage 40 abgesetzte Kerne 80, 82 unter Schaffung eines zwei Lagenumschläge 106, 108 aufweisenden Reifenrohlings 130. In der in Fig. 2 gezeigten Stellung befinden sich die beiden Umbugglocken 50, 52 in einer maximal axial zusammengefahrenen Position in Bezug zur Bautrommel 20, zu den Bälgen 34, 36 und der darauf angeordneten Einlage 40. Die axiale Lage der Bautrommel 20 sowie die axialen Positionen der Gehäuseteile 12, 14 in Relation zum Unterteil 18 sind in Bezug zur Mittelebene 92 beziehungsweise dem Unterteil 18 gleichfalls unverändert und entsprechen der von Fig. 1.

Das beidseitige axiale Zusammenfahren der Umbugglocken 50, 52 erfolgt mittels der jeweils einem Gehäuseteil 12, 14 zugeordneten Lineargetriebe 66, 68; 70, 72 der beiden Linearantriebe 54, 56, wobei die Lineargetriebe mit den Bezugszeichen 66, 68 mittels des ersten Verteilergetriebes 62 und die Lineargetriebe mit den Bezugszeichen 70, 72 mittels des zweiten Verteilergetriebes 64 drehend antreibbar sind. Hierbei können die Umbugglocken 50, 52 synchron oder jeweils unabhängig voneinander axial positioniert und verfahren werden, wobei durch eine Drehrichtungsumkehr der Elektromotoren 58, 60 eine Umkehrung der axialen Bewegung der Umbugglocken 50, 52 erfolgen kann.

Außerdem befinden sich der erste Balg 34 sowie der zweite Balg 36 in der in Fig. 2 dargestellten Betriebssituation jeweils in einem radial expandierten beziehungsweise aufgeblasenen Zustand. Die beiden Kerne 80, 82 sind einschließlich ihrer nicht sichtbaren Profilfortsätze beziehungsweise Profillappen jeweils in einem randseitigen, ersten und zweiten Lagenumschlag 106, 108 der Einlage 40 zur Schaffung eines Reifenrohlings 130 aufgenommen. Dieser Reifenrohling 130 stellt demnach eine fertigungstechnische Vorstufe eines fertigen Fahrzeugreifens dar.

Während des axialen Bewegens der beiden Umbugglocken 50, 52 in Richtung zur Bautrommel 20 werden deren axiale Positionen sowie zumindest die beim Ansetzen oder Aufsetzen der beiden Kerne 80, 82 auftretenden Kernsetzkräfte F_{1,} F₂ mittels der beiden Messeinrichtungen 98, 100 erfasst, so dass die Elektromotoren 58, 60 mit Hilfe der Regeleinrichtungen 94, 96 entsprechend angesteuert und geregelt betrieben werden können. Die Ansteuerung der Elektromotoren 58, 60 erfolgt bevorzugt derart, dass zumindest eine axiale Verfahrgeschwindigkeit der Umbugglocken 50, 52, deren axiale Positionen und die während der axialen Verfahrvorgänge auf die Umbugglocken 50, 52 einwirkenden mechanischen Kräfte, insbesondere die Kernsetzkräfte F_{1,} F₂, beispielsweise vorgegebene Grenzwerte nicht überschreiten. Darüber hinaus lassen sich bevorzugt sämtliche Bewegungsparameter der Umbugglocken 50, 52, insbesondere die Verfahrgeschwindigkeit, die Beschleunigung sowie zumindest die auftretenden Kernsetzkräfte F_{1,} F₂ in Abhängigkeit von ihrer jeweiligen absoluten axialen Verfahrposition entlang der ganzen Bewegungsstrecke mit hoher Genauigkeit automatisch und kontrolliert von den Regeleinrichtungen 94, 96 einstellen beziehungsweise in den Regeleinrichtungen 94, 96 vorprogrammieren.

Ausgehend von der in Fig. 1 dargestellten Ausgangsposition der Reifenbauvorrichtung 10 soll nachfolgend der Ablauf des erfindungsgemäßen Verfahrens zur Herstellung des Reifenrohlings 130 eingehend erläutert werden:
Zunächst erfolgt ein Belegen der Bautrommel 20 der Reifenbauvorrichtung 10 mit einer Innenschicht 38 sowie radial darüber mit einer Einlage 40, wobei die Innenschicht 38 und die Einlage 40 jeweils aus nicht vulkanisierten Gummimischungen bestehen, und wobei die axialen Enden der Einlage 40 auf jeweils einem noch nicht aufgeblasenen Balg 34, 36 abgelegt werden. Darüber hinaus können weitere, nicht dargestellte Elemente, wie zum Beispiel schmale Bänder, Streifen, Faserarmierungen, Faserstränge oder dergleichen auf der Bautrommel 20 schichtweise abgelegt werden.

Sodann werden die beiden Umbugglocken 50, 52 mit den darin gehaltenen Kernen 80, 82 mittels der Linearantriebe 54, 56 axial soweit über die Bautrommel 20 gefahren, dass die beiden Kerne 80, 82 auf die axialen Endbereiche der Einlage 40 platziert beziehungsweise abgesetzt und zumindest hierbei auftretende jeweilige Kernsetzkräfte F_{1,} F₂ erfasst werden können. Durch das Erfassen der Kernsetzkräfte F_{1,} F₂ können die Linearantriebe 54, 56 der Umbugglocken 50, 52 mittels der Regeleinrichtungen 94, 96 so angesteuert und geregelt betrieben werden, dass sich ein verlässlich reproduzierbarer Kernsetzvorgang einstellt, der optimale Produktionsergebnisse ermöglicht.

Danach werden die Umbugglocken 50, 52 zumindest bis zur radialen Freigabe der Bälge 34, 36 axial zurückgefahren, wodurch sich im Vergleich zu einem konventionellen Antrieb der Umbugglocken 50, 52 mit Pneumatikzylindern kürzere axiale Verfahrwege ergeben, so dass mit der vorgestellten Reifenbauvorrichtung 10 insgesamt kürzere Taktzeiten realisierbar sind.

Im Anschluss daran werden die Bälge 34, 36 mittels Druckluft zumindest teilweise radial expandiert beziehungsweise aufgeblasen, wodurch die Einlange 40 an ihren axialen Enden angehoben wird. Hiernach werden die Umbugglocken 50, 52 wieder axial aufeinander zu bewegt, wobei sich die beiden Bälge 34, 36 bei einem entsprechenden radialen Kontakt mit den zugeordneten Umbugglocken 50, 52 ein Stück axial über die Bautrommel 20 abrollen und sich zugleich die Einlage 40 endseitig um jeweils einen der Kerne 80, 82 unter Schaffung von zwei Lagenumschlägen 106, 108 herum schlägt. Während dieses Vorgangs können die beiden Bälge 34, 36 kurzeitig etwas entlüftet und dann wieder belüftet werden, beispielsweise um eine Faltenbildung zu verhindern. Danach werden die beiden Bälge 34, 36 wieder entlüftet beziehungsweise eingeschrumpft und die Umbugglocken 50, 52 dann erneut zumindest bis zur radialen Freigabe der nunmehr flach an den Balgträgern 30, 32 anliegenden Bälge 34, 36 auseinander gefahren.

In einem letzten Verfahrensschritt erfolgt die Entnahme und Weiterverarbeitung des Reifenrohlings 130 zu einem fertigen Fahrzeugreifen gemäß einem der üblichen Herstellverfahren. Beispielsweise kann durch entsprechendes axiales Verfahren und radiales Anheben oder Absenken der hier nicht bezeichneten Seitenteile und des Mittelteils der Bautrommel 20 in Relation zueinander, die in der Regel gewünschte U-förmige Querschnittskontur des Reifenrohlings 130 ausgebildet werden. Im Anschluss daran können noch eine Gürteleinlage sowie ein Laufstreifen mit ausreichender Materialstärke umfangsseitig auf den Reifenrohling 130 aufgebracht sowie mit diesem durch Anwendung einer Anpresskraft verklebt werden. Die notwendige Anpresskraft kann zum Beispiel mit Hilfe mindestens einer umlaufenden Rolle oder dergleichen aufgebracht werden. Ferner können noch Seitenwandverstärkungen aufgebracht und zum Verkleben an den Reifenrohling 130 angepresst werden. Abschließend wird der Reifenrohling 130 in einem geeigneten zweiteiligen Formwerkzeug unter bevorzugt gleichzeitiger Anwendung von Druck und Temperatur zu einem fertigen Reifen vulkanisiert.

Hinsichtlich der weiteren Einzelheiten des Verfahrens sei gleichfalls exemplarisch auf die Offenbarung der weiter oben bereits erwähnten Druckschrift DE 10 2009 025 759 A1 verwiesen. Die Weiterverarbeitung des Reifenrohlings 130 im Zuge des letzten Verfahrensschritts kann hierbei mittels der Reifenbauvorrichtung 10 oder auch auf einer weiteren, hier nicht dargestellten Vorrichtung beziehungsweise Maschine erfolgen.

Aufgrund der beiden komplex regelbaren Linearantriebe 54, 56 lassen sich die Bewegungsabläufe der Umbugglocken 50, 52 auf vielfältigste und flexible Art und Weise steuern. So lassen sich beispielsweise nicht eingezeichnete axiale Vorpositionen und Zwischenpositionen der Umbugglocken 50, 52, die im Bereich der Bälge 34, 36 liegen, derart wählen, dass sich die Umbugglocken 50, 52 und die expandierten Bälge 34, 36 an definierten, hier der besseren zeichnerischen Übersicht halber nicht dargestellten Orten berühren, was unter anderem eine verbesserte Ausnutzung der maximal zur Verfügung stehenden axialen Länge der Bälge 34, 36 ermöglicht.

Fig. 2 zeigt auch, dass die erste Kernsetzkraft F₁ der ersten Umbugglocke 50 und die zweite Kernsetzkraft F₂ der zweiten Umbugglocke 52 jeweils mittels mindestens eines Kraftmesssensors 88, 90 erfassbar sind. Auch mit diesen Kraftmesssensoren 88, 90 ist eine direkte, weitgehend verzögerungsfreie und daher besonders genaue Erfassung der Kernsetzkräfte F₁, F₂ möglich. Die Kraftmesssensoren 88, 90 können zum Beispiel im Bereich der Umbugglocken und/oder deren Linearantriebe angeordnet sowie als Piezosensoren ausgebildet sein.

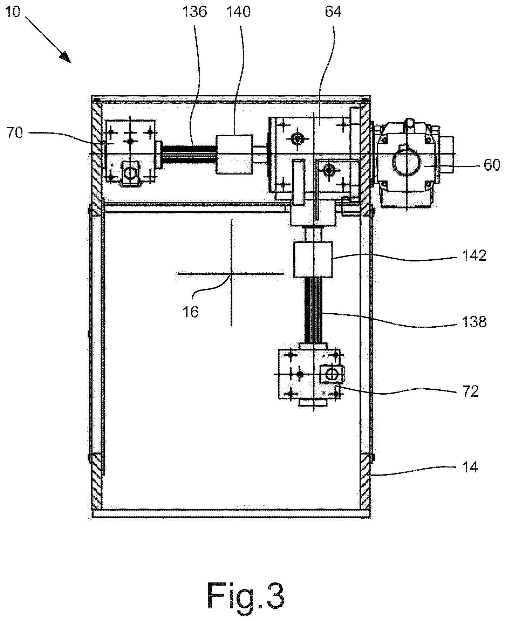

Die Fig. 3 zeigt einen Querschnitt durch die Reifenbauvorrichtung 10 entlang der Schnittlinie III-III von Fig. 2. Der außerhalb des rechtsseitigen, zweiten Gehäuseteils 14 der Reifenbauvorrichtung 10 befestigte zweite Elektromotor 60 treibt mittels des zweiten Verteilergetriebes 64 die beiden parallel zur Längsmittelachse 16 angeordneten Lineargetriebe 70, 72 an. Die beiden Lineargetriebe 70, 72 sind erkennbar diametral beziehungsweise diagonal zur Längsmittelachse 16 im ortsfesten Gehäuseteil 14 angeordnet. Die mechanische Kopplung zwischen dem Verteilergetriebe 64 und den beiden Lineargetrieben 70, 72 erfolgt mithilfe von zwei rechtwinklig zueinander angeordneten Wellen 136, 138 sowie zwei Kupplungen 140, 142 zum axialen Toleranzausgleich. Durch die mittels des Verteilergetriebes 64, den Wellen 136, 138 sowie den Kupplungen 140, 142 mechanisch starr angekoppelten Lineargetrieben 70, 72 ist stets ein vollkommener Gleichlauf der Lineargetriebe 70, 72 beim Ein- und Ausfahren parallel zur Längsmittelachse 16 gewährleistet, so dass die beiden Umbugglocken 50, 52 stets mit höchster Genauigkeit und definierter Kraftwirkung positionierbar sind, sowie hierbei stets parallel zur Mittelebene 92 der Bautrommel 20 orientiert sind und nicht verkippen.

Mittels der erfindungsgemäßen Reifenbauvorrichtung 10 lassen sich insbesondere die Kernsetzkräfte F₁, F₂ der beiden Umbugglocken 50, 52 exakt definiert einstellen. Zudem können sämtliche Prozessablaufbewegungen geregelt stattfinden, welches unter anderem bei der Realisierung von großen Lagenumschlägen hilfreich ist. Darüber hinaus legen die beiden Umbugglocken 50 ,52 nur noch die prozesstechnisch unbedingt notwendigen axialen Verfahrwege zurück, so dass kürzere Taktzeiten mit der vorgestellten Reifenbauvorrichtung 10 möglich sind. Darüber hinaus ergibt sich ein beträchtliches Energieeinsparpotential durch den Austausch der bislang eingesetzten Pneumatikzylinder durch zwei Elektromotore.

### Bezugszeichen

- 10: Reifenbauvorrichtung
- 12: Erstes Gehäuseteil
- 14: Zweites Gehäuseteil
- 16: Längsmittelachse
- 18: Unterteil
- 20: Bautrommel
- 24: Mittelteil der Bautrommel
- 26: Erstes Seitenteil der Bautrommel
- 28: Zweites Seitenteil der Bautrommel
- 30: Erster Balgträger
- 32: Zweiter Balgträger
- 34: Erster Balg
- 36: Zweiter Balg
- 38: Innenschicht
- 40: Einlage
- 50: Erste Umbugglocke
- 52: Zweite Umbugglocke
- 54: Erster Linearantrieb
- 56: Zweiter Linearantrieb
- 58: Erster Elektromotor
- 60: Zweiter Elektromotor
- 62: Erstes Verteilergetriebe
- 64: Zweites Verteilergetriebe
- 66: Erstes Lineargetriebe der ersten Umbugglocke
- 68: Zweites Lineargetriebe der ersten Umbugglocke
- 70: Erstes Lineargetriebe der zweiten Umbugglocke
- 72: Zweites Lineargetriebe der zweiten Umbugglocke
- 80: Erster ringförmiger Kern
- 82: Zweiter ringförmiger Kern
- 84: Erster Bereich
- 86: Zweiter Bereich
- 88: Erster Kraftmesssensor
- 90: Zweiter Kraftmesssensor
- 92: Mittelebene
- 94: Regeleinrichtung für den ersten Elektromotor
- 96: Regeleinrichtung für den zweiten Elektromotor
- 98: Erste Messeinrichtung
- 100: Zweite Messeinrichtung
- 102: Erste Motorstrommesseinrichtung
- 104: Zweite Motorstrommesseinrichtung
- 106: Erster Lagenumschlag der Einlage
- 108: Zweiter Lagenumschlag der Einlage
- 110: Erster Anbindungspunkt an erster Umbugglocke für Kraftsensor
- 112: Zweiter Anbindungspunkt an erster Umbugglocke für Kraftsensor
- 114: Erster Anbindungspunkt an zweiter Umbugglocke für Kraftsensor
- 116: Zweiter Anbindungspunkt an zweiter Umbugglocke für Kraftsensor
- 130: Reifenrohling
- 136: Erste Welle
- 138: Zweite Welle
- 140: Erste Kupplung
- 142: Zweite Kupplung
- F₁: Erste Kernsetzkraft
- F₂: Zweite Kernsetzkraft

## Patentansprüche

1. Reifenbauvorrichtung (10) zum Herstellen eines Reifenrohlings (130) mit Hilfe mindestens einer auf einer Bautrommel (20), auf der eine Innenschicht (38) sowie radial darüber eine Einlage (40) ablegbar sind, wobei die Innenschicht (38) und die Einlage (40) jeweils aus nicht vulkanisierten Gummimischungen bestehen, bei der axial beiderseits neben der Bautrommel (20) jeweils ein zylindrischer Balgträger (30, 32) angeordnet ist, auf denen jeweils ein aufblasbarer Balg (34, 36) ablegbar ist, bei der axial neben jeden der beiden Balgträger (30, 32) jeweils eine axial verfahrbare Umbugglocke (50, 52) angeordnet ist, bei der an den beiden Umbugglocken (50, 52) an deren zueinander weisenden Seiten jeweils ein ringförmiger Kern (80, 82) angeordnet werden kann, bei der nach einem axialen Heranfahren der beiden Umbugglocken (50, 52) an die Einlage (40) die beiden Kerne (80, 82) auf dieser Einlage (40) axial endseitig aufgesetzt werden können, bei der nach einem axialen Zurückfahren der beiden Umbugglocken (50, 52) die beiden Bälge (34, 36) aufblasbar sind, bei der durch ein erneutes axiales Heranfahren der Umbugglocken (50, 52) in Richtung zur Bautrommel (20) die axialen Enden der Einlage (40) mit Hilfe der aufgeblasenen Bälge (34, 36) von den Umbugglocken (50, 52) um den jeweils zugeordneten Kern (80, 82) unter Ausbildung eines ersten und zweiten Lagenumschlags (106, 108) umschlagbar sind, und bei der die Bautrommel (20), die Balgträger (30, 32), die Bälge (34, 36) sowie die Umbugglocken (50, 52) jeweils koaxial zu einer horizontal verlaufenden Längsmittelachse (16) angeordnet sind, **dadurch gekennzeichnet, dass** die Umbugglocken (50, 52) zum Aufsetzen der Kerne (80, 82) unabhängig voneinander mittels jeweils eines eigenen Linearantriebs (54, 56) in Bezug zur Bautrommel (20) axial verfahrbar sind, dass zumindest eine an der ersten Umbugglocke (50) wirksame erste Kernsetzkraft (F₁) und eine an der zweiten Umbugglocke (52) wirksame zweite Kernsetzkraft (F₂) mittels mindestens einer Messeinrichtung (98, 100) erfassbar sind, dass die von der mindestens einen Messeinrichtung (98, 100) erfassten Messwerte mindestens einer Regeleinrichtung (94, 96) zur Steuerung und Regelung der beiden Linearantriebe (54, 56) zuleitbar sind, und dass mittels der mindestens einen Regeleinrichtung (94, 96) zumindest die beiden Kernsetzkräfte (F₁, F₂) durch Einwirken auf die beiden Linearantriebe (54, 56) regelbar sind, wobei die jeweilige Kernsetzkraft (F₁, F₂) angibt, mit welcher axialen Kraft die Umbugglocken (50, 52) die Kerne (80, 82) auf die Einlage (40) aufsetzen.

2. Reifenbauvorrichtung nach Anspruch 1, **dadurch gekennzeichnet, dass** jeder Linearantrieb (54, 56) mindestens zwei Lineargetriebe (66, 68, 70, 72) aufweist, die von jeweils einem Verteilergetriebe (62, 64) und von jeweils einem Elektromotor (58, 60) antreibbar sind.

3. Reifenbauvorrichtung nach Anspruch 1 oder 2, **dadurch gekennzeichnet, dass** die erste Kernsetzkraft (F₁) der ersten Umbugglocke (50) und die zweite Kernsetzkraft (F₂) der zweiten Umbugglocke (52) jeweils mittels einer dem ersten Linearantrieb (54) und dem zweiten Linearantrieb (56) zugeordneten ersten und zweiten Motorstrommesseinrichtung (102, 104) erfassbar sind.

4. Reifenbauvorrichtung nach Anspruch 1 oder 2, **dadurch gekennzeichnet, dass** die erste Kernsetzkraft (F₁) der ersten Umbugglocke (50) und die zweite Kernsetzkraft (F₂) der zweiten Umbugglocke (52) jeweils mittels mindestens eines Kraftmesssensors (88, 90) erfassbar sind.

5. Reifenbauvorrichtung nach einem der Ansprüche 1 bis 4, **dadurch gekennzeichnet, dass** jeder Linearantrieb (54, 56) jeweils zwei Lineargetriebe (66, 68, 70, 72) aufweist, die diametral zueinander sowie parallel in Bezug zu der Längsmittelachse (16) zumindest teilweise in einem ersten Gehäuseteil (12) beziehungsweise in einem zweiten Gehäuseteil (14) der Reifenbauvorrichtung (10) angeordnet sind, wobei das erste Gehäuseteil (12) axial verschiebbar und das zweite Gehäuseteil (14) ortsfest angeordnet ist.

6. Reifenbauvorrichtung nach Anspruch 5, **dadurch gekennzeichnet, dass** die zwei Lineargetriebe (66, 68, 70, 72) eines jeden Linearantriebs (54, 56) jeweils durch ein Zahnstangengetriebe gebildet sind.

7. Reifenbauvorrichtung nach Anspruch 5, **dadurch gekennzeichnet, dass** die zwei Lineargetriebe eines jeden Linearantriebs (54, 56) jeweils durch ein Kugelgewindegetriebe oder Spindelhubgetriebe gebildet sind.

8. Verfahren zum Herstellen eines Reifenrohlings (130) mittels der Reifenbauvorrichtung (10) nach einem der Ansprüche 1 bis 6, umfassend die folgenden Schritte:
a) Belegen einer Bautrommel (20) der Reifenbauvorrichtung (10) mit einer Innenschicht (38) sowie radial darüber mit einer Einlage (40), wobei die Innenschicht (38) und die Einlage (40) jeweils aus nicht vulkanisierten Gummimischungen bestehen, und wobei die axialen Enden der Einlage (40) auf jeweils einem noch nicht aufgeblasenen Balg (34, 36) liegen,
b) beidseitig axiales Heranfahren von zwei Umbugglocken (50, 52) an die Bautrommel (20) mittels jeweils einem Linearantrieb (54, 56),
c) Auflegen und Anpressen von jeweils einem an den beiden Umbugglocken (50, 52) gehaltenen ringförmigen Kern (80, 82) auf die Einlage (40) im Bereich derer axialen Enden,
d) dabei Erfassen von Kernsetzkräften (F₁, F₂), welche die Anpresskraft der Umbugglocken (50, 52) angeben, sowie Weiterleiten der Messwerte an eine Regeleinrichtung (94, 96) zur Steuerung und Regelung der Linearantriebe (54, 56),
c) axiales Zurückfahren der beiden Umbugglocken (50, 52) bis zur radialen Freigabe der beiden Bälge (34, 36),
d) zumindest teilweises Aufblasen der beiden Bälge (34, 36),
e) erneutes beidseitiges axiales Heranfahren der Umbugglocken (50, 52) an die Bautrommel (20), dabei mittels eines radialen Kontaktes der Umbugglocken (50, 52) mit den Bälgen (34, 36) Abrollen der beiden Bälge (34, 36) auf der Einlage (40) und zugleich Umschlagen der axialen Enden der Einlage (40) um einen zugeordneten Kern (80, 82) unter Schaffung von zwei Lagenumschlägen (106, 108),
f) erneutes axiales Zurückfahren der Umbugglocken (50, 52) bis zur Freigabe der Bälge (34, 36),
g) Weiterverarbeiten des so erzeugten Reifenrohlings (130) zu einem fertigen Reifen für ein Fahrzeug.

9. Verfahren nach Anspruch 8, **dadurch gekennzeichnet, dass** mittels der Messeinrichtung (98, 100) diejenigen Kräfte gemessen werden, welche beim Erzeugen der axialen Lagenumschläge (106, 108) entstehen, und dass daraus Steuerungssignale angeleitet werden, mittels denen die Elektromotoren (58, 60) während der Axialbewegung der Umbugglocken (50, 52) zur Erzeugung der Lagenumschläge (106, 108) gesteuert werden.

## Claims

1. Tyre building device (10) for producing a tyre blank (130) with the aid of at least one on a building drum (20), on which an inner layer (38) and radially thereover an insert (40) can be placed, wherein the inner layer (38) and the insert (40) respectively consist of unvulcanized rubber compounds, in which device a cylindrical bladder support (30, 32) is respectively arranged axially on both sides next to the building drum (20), on which supports an inflatable bladder (34, 36) can be respectively placed, in which device an axially movable turn-up bell (50, 52) is respectively arranged axially next to each of the two bladder supports (30, 32), in which device an annular core (80, 82) can be respectively arranged on the two turn-up bells (50, 52), on the sides thereof that are facing one another, in which device, after the two turn-up bells (50, 52) have been moved axially up to the insert (40), the two cores (80, 82) can be mounted axially on the end of this insert (40), in which device, after the two turn-up bells (50, 52) have been moved axially back, the two bladders (34, 36) can be inflated, in which device, by once again moving the turn-up bells (50, 52) axially in the direction of the folding drum (20), the axial ends of the insert (40) can be turned up with the aid of the inflated bladders (34, 36) by the turn-up bells (50, 52) around the respectively assigned core (80, 82) to form a first and a second ply turn-up (106, 108), and in which device the building drum (20), the bladder supports (30, 32), the bladders (34, 36) and also the turn-up bells (50, 52) are respectively arranged coaxially in relation to a horizontally running longitudinal centre axis (16), **characterized in that** the turn-up bells (50, 52) for mounting the cores (80, 82) are axially movable independently of one another with respect to the building drum (20) respectively by means of a linear drive (54, 56) of their own, **in that** at least a first core setting force (F₁), effective at the first turn-up bell (50), and a second core setting force (F₂), effective at the second turn-up bell (52), can be recorded by means of at least one measuring device (98, 100), **in that** the measured values recorded by the at least one measuring device (98, 100) can be sent to at least one control device (94, 96) for the open-loop and closed-loop control of the two linear drives (54, 56), and **in that**, by means of the at least one control device (94, 96), at least the two core setting forces (F₁, F₂) can be controlled by acting on the two linear drives (54, 56), wherein the respective core setting force (F₁, F₂) indicates with which axial force the turn-up bells (50, 52) mount the cores (80, 82) onto the insert (40).

2. Tyre building device according to Claim 1, **characterized in that** each linear drive (54, 56) has at least two linear gear mechanisms (66, 68, 70, 72), which can be driven respectively by a power transfer unit (62, 64) and respectively by an electric motor (58, 60).

3. Tyre building device according to Claim 1 or 2, **characterized in that** the first core setting force (F₁) of the first turn-up bell (50) and the second core setting force (F₂) of the second turn-up bell (52) can be recorded respectively by means of a first and a second motor current measuring device (102, 104) assigned to the first linear drive (54) and the second linear drive (56).

4. Tyre building device according to Claim 1 or 2, **characterized in that** the first core setting force (F₁) of the first turn-up bell (50) and the second core setting force (F₂) of the second turn-up bell (52) can be recorded respectively by means of at least one force measuring sensor (88, 90).

5. Tyre building device according to one of Claims 1 to 4, **characterized in that** each linear drive (54, 56) respectively has two linear gear mechanisms (66, 68, 70, 72), which are arranged diametrically in relation to one another and parallel with respect to the longitudinal centre axis (16) at least partially in a first housing part (12) and/or in a second housing part (14) of the tyre building device (10), wherein the first housing part (12) is arranged axially displaceably and the second housing part (14) is arranged fixed in place.

6. Tyre building device according to Claim 5, **characterized in that** the two linear gear mechanisms (66, 68, 70, 72) of each linear drive (54, 56) are respectively formed by a rack-and-pinion gear mechanism.

7. Tyre building device according to Claim 5, **characterized in that** the two linear gear mechanisms of each linear drive (54, 56) are respectively formed by a ball-screw gear mechanism or spindle-lifting gear mechanism.

8. Method for producing a tyre blank (130) by means of the tyre building device (10) according to one of Claims 1 to 6, comprising the following steps:
a) loading a building drum (20) of the tyre building device (10) with an inner layer (38) and radially thereover with an insert (40), wherein the inner layer (38) and the insert (40) respectively consist of unvulcanized rubber compounds, and wherein the axial ends of the insert (40) lie respectively on a not yet inflated bladder (34, 36),
b) moving two turn-up bells (50, 52) axially up to the building drum (20) on both sides by means of respectively a linear drive (54, 56),
c) placing and pressing respectively an annular core (80, 82), held on the two turn-up bells (50, 52), onto the insert (40) in the region of the axial ends thereof,
d) at the same time recording core setting forces (F₁, F₂), which indicate the pressing force of the turn-up bells (50, 52), and passing on the measured values to a control device (94, 96) for the open-loop and closed-loop control of the linear drives (54, 56),
c) moving the two turn-up bells (50, 52) axially back until the two bladders (34, 36) are radially released,
d) at least partially inflating the two bladders (34, 36),
e) once again moving the turn-up bells (50, 52) axially up to the building drum (20) on both sides, at the same time, by means of a radial contact of the turn-up bells (50, 52) with the bladders (34, 36), rolling the two bladders (34, 36) on the insert (40) and at the same time turning up the axial ends of the insert (40) around an assigned core (80, 82) to create two ply turn-ups (106, 108),
f) once again moving the turn-up bells (50, 52) axially back until the bladders (34, 36) are released,
g) further processing the tyre blank (130) thus created to form a finished tyre for a vehicle.

9. Method according to Claim 8, **characterized in that**, by means of the measuring device (98, 100), those forces that are produced during the creation of the axial ply turn-ups (106, 108) are measured, and **in that** they are used to direct control signals by means of which the electric motors (58, 60) are controlled during the axial movement of the turn-up bells (50, 52) to create the ply turn-ups (106, 108) .

## Revendications

1. Système d'assemblage de pneu (10) destiné à fabriquer une ébauche de pneu (130) à l'aide d'au moins un sur un tambour d'assemblage (20), sur lequel peuvent être déposées une couche interne (38) et, dans le sens radial au-dessus de celle-ci, une doublure (40), la couche interne (38) et la doublure (40) étant respectivement constituées de mélanges de caoutchouc non vulcanisés, avec lequel un porte-soufflet cylindrique (30, 32), sur lequel peut être respectivement déposé un soufflet gonflable (34, 36), est respectivement disposé dans le sens axial des deux côtés à côté du tambour d'assemblage (20), avec lequel une cloche de rembordage (50, 52) pouvant être déplacée dans le sens axial est respectivement disposée dans le sens axial à côté de chacun des porte-soufflets (30, 32), avec lequel un noyau (80, 82) en forme d'anneau peut respectivement être disposé sur les deux cloches de rembordage (50, 52) sur leurs côtés orientés l'un vers l'autre, avec lequel, après une approche axiale des deux cloches de rembordage (50, 52) contre la doublure (40), les deux noyaux (80, 82) peuvent être posés du côté de l'extrémité dans le sens axial sur cette doublure (40), avec lequel, après un recul axial des deux cloches de rembordage (50, 52), les deux soufflets (34, 36) peuvent être gonflés, avec lequel, par une nouvelle approche axiale des cloches de rembordage (50, 52) en direction du tambour d'assemblage (20), les extrémités axiales de la doublure (40) peuvent être rabattues à l'aide des soufflets (34, 36) gonflés par les cloches de rembordage (50, 52) autour du noyau (80, 82) respectivement associé en formant un premier et un deuxième rabat de couches (106, 108), et avec lequel le tambour d'assemblage (20), les porte-soufflets (30, 32), les soufflets (34, 36) ainsi que les cloches de rembordage (50, 52) sont respectivement disposés de manière coaxiale par rapport à un axe central longitudinal (16) qui s'étend horizontalement, **caractérisé en ce que** les cloches de rembordage (50, 52), en vue de poser les noyaux (80, 82), peuvent être déplacées dans le sens axial par rapport au tambour d'assemblage (20) indépendamment l'une de l'autre respectivement au moyen d'un mécanisme d'entraînement linéaire (54, 56) propre, **en ce qu'**au moins une première force de pose de noyau (F₁) agissant au niveau de la première cloche de rembordage (50) et une deuxième force de pose de noyau (F₂) agissant au niveau de la deuxième cloche de rembordage (52) peuvent être acquises au moyen d'au moins un dispositif de mesure (98, 100), **en ce que** les valeurs mesurées acquises par l'au moins un dispositif de mesure (98, 100) peuvent être acheminées à au moins un dispositif de régulation (94, 96) destiné à commander et à réguler les deux mécanismes d'entraînement linéaire (54, 56), et **en ce qu'**au moins les deux forces de pose de noyau (F₁, F₂) peuvent être régulées au moyen de l'au moins un dispositif de régulation (94, 96) en agissant sur les deux mécanismes d'entraînement linéaires (54, 56), la force de pose de noyau (F₁, F₂) respective indiquant la force axiale avec laquelle les cloches de rembordage (50, 52) posent les noyaux (80, 82) sur la doublure (40) .

2. Système d'assemblage de pneu selon la revendication 1, **caractérisé en ce que** chaque mécanisme d'entraînement linéaire (54, 56) possède au moins deux transmissions linéaires (66, 68, 70, 72) qui peuvent être entraînées respectivement par une boîte de transfert (62, 64) et respectivement par un moteur électrique (58, 60).

3. Système d'assemblage de pneu selon la revendication 1 ou 2, **caractérisé en ce que** la première force de pose de noyau (F₁) de la première cloche de rembordage (50) et la deuxième force de pose de noyau (F₂) de la deuxième cloche de rembordage (52) peuvent respectivement être captées au moyen d'un premier et d'un deuxième appareil de mesure de courant de moteur (102, 104) associé au premier mécanisme d'entraînement linéaire (54) et au deuxième mécanisme d'entraînement linéaire (56).

4. Système d'assemblage de pneu selon la revendication 1 ou 2, **caractérisé en ce que** la première force de pose de noyau (F₁) de la première cloche de rembordage (50) et la deuxième force de pose de noyau (F₂) de la deuxième cloche de rembordage (52) peuvent respectivement être captées au moyen d'au moins un capteur dynamométrique (88, 90).

5. Système d'assemblage de pneu selon l'une des revendications 1 à 4, **caractérisé en ce que** chaque mécanisme d'entraînement linéaire (54, 56) possède respectivement deux transmissions linéaires (66, 68, 70, 72) qui sont disposées diamétralement l'une par rapport à l'autre ainsi que parallèlement en référence à l'axe central longitudinal (16) au moins partiellement dans une première partie de boîtier (12) ou dans une deuxième partie de boîtier (14) du système d'assemblage de pneu (10), la première partie de boîtier (12) étant coulissante dans le sens axial et la deuxième partie de boîtier (14) étant montée en position fixe.

6. Système d'assemblage de pneu selon la revendication 5, **caractérisé en ce que** les deux transmissions linéaires (66, 68, 70, 72) de chaque mécanisme d'entraînement linéaire (54, 56) sont respectivement formées par un engrenage à crémaillère.

7. Système d'assemblage de pneu selon la revendication 5, **caractérisé en ce que** les deux transmissions linéaires de chaque mécanisme d'entraînement linéaire (54, 56) sont respectivement formées par une transmission par vis à billes ou un vérin à vis.

8. Procédé de fabrication d'une ébauche de pneu (130) au moyen du système d'assemblage de pneu (10) selon l'une des revendications 1 à 6, comprenant les étapes suivantes :
a) garniture d'un tambour d'assemblage (20) du système d'assemblage de pneu (10) avec une couche interne (38) et, dans le sens radial au-dessus de celle-ci, une doublure (40), la couche interne (38) et la doublure (40) étant respectivement constituées de mélanges de caoutchouc non vulcanisés, et les extrémités axiales de la doublure (40) reposant respectivement sur un soufflet (34, 36) par encore gonflé,
b) rapprochement axial, par les deux côtés, de deux cloches de rembordage (50, 52) en direction du tambour d'assemblage (20) respectivement au moyen d'un mécanisme d'entraînement linéaire (54, 56),
c) pose et pressage respectivement d'un noyau (80, 82) en forme d'anneau maintenu au niveau des deux cloches de rembordage (50, 52) sur la doublure (40) dans la zone de ses extrémités axiales,
d) acquisition à cette occasion de forces de pose de noyau (F₁, F₂) qui indiquent la force de pressage des cloches de rembordage (50, 52), et retransmission des valeurs mesurées à un dispositif de régulation (94, 96) destiné à commander et à réguler les mécanismes d'entraînement linéaire (54, 56),
c) recul axial des deux cloches de rembordage (50, 52) jusqu'à la libération radiale des deux soufflets (34, 36),
d) gonflage au moins partiel des deux soufflets (34, 36),
e) nouveau rapprochement axial, par les deux côtés, des cloches de rembordage (50, 52) en direction du tambour d'assemblage (20), à cette occasion au moyen d'un contact radial des cloches de rembordage (50, 52) avec les soufflets (34, 36), déroulement des deux soufflets (34, 36) sur la doublure (40) et simultanément retournement des extrémités axiales de la doublure (40) autour d'un noyau (80, 82) associé en réalisant deux rabats de couches (106, 108),
f) nouveau recul axial des cloches de rembordage (50, 52) jusqu'à la libération des soufflets (34, 36),
g) transformation de l'ébauche de pneu (130) ainsi produite en un pneu fini pour un véhicule.

9. Procédé selon la revendication 8, **caractérisé en ce que** les forces mesurées au moyen du dispositif de mesure (98, 100) sont celles qui sont produites lors de la génération des rabats de couches (106, 108) axiaux, et **en ce que** des signaux de commande en sont guidés, au moyen desquels les moteurs électriques (58, 60) sont commandés pendant le mouvement axial des cloches de rembordage (50, 52) en vue de générer les rabats de couches (106, 108).
